Europäisches Patentamt

European Patent Office

Office européen des brevets

(11) Veröffentlichungsnummer: **0 499 276 A1**

# EUROPÄISCHE PATENTANMELDUNG

(21) Anmeldenummer: **92102518.5**

(51) Int. Cl.5: **B65G 1/137**

(22) Anmeldetag: **14.02.92**

(30) Priorität: **14.02.91 DE 4104527**

(43) Veröffentlichungstag der Anmeldung:
**19.08.92 Patentblatt 92/34**

(84) Benannte Vertragsstaaten:
**AT CH DE ES FR GB IT LI**

(71) Anmelder: **KNAPP LOGISTIK AUTOMATION, Ges. m.b.H.**
**Günter-Knapp-Strasse 5-7**
**A-8042 Graz(AT)**

(72) Erfinder: **Mosbacher, Anton**
**Waltendorfer Hauptstrasse 111**
**A-8010 Graz(AT)**

(74) Vertreter: **Kinzebach, Werner, Dr. et al**
**Patentanwälte Reitstötter, Kinzebach und Partner Sternwartstrasse 4 Postfach 86 06 49**
**W-8000 München 86(DE)**

(54) **Vorrichtung und Verfahren zum Kommissionieren von Stückgut.**

(57) Es werden ein Verfahren und eine Vorrichtung zum Kommissionieren von Stückgutsorten beschrieben, das bzw. die sich eines rechnergesteuerten Paternosterregales bedient, in welchem die Artikel in Fächern, die zu Tragsätzen zusammengefaßt sind, bereitgehalten werden. Die Artikel werden manuell entnommen und in Sammelbehälter (8) gelegt, die in einen Arbeitstisch (7) vor dem Regal (1) kippbar eingebaut sind. Von dort werden sie in vorbeifahrende Kommissionierbehälter (12) überführt.

EP 0 499 276 A1

Die Erfindung betrifft ein Verfahren und eine Vorrichtung zum Kommissionieren von Stückgutsorten, die in einem rechnergesteuerten Paternoster-Regal in Fächern bereitgehalten werden, die zu Tragsätzen zusammengefaßt sind, bei dem man jeweils einen bestimmten Tragsatz in Entnahmeposition bringt und das gewünschte Stückgut einem bestimmten Fach des Tragsatzes entnimmt.

Das Bereithalten und Kommissionieren von Stückgut erfolgt je nach Problemstellung in mehr oder weniger großen Regalen, die in Bezug auf die Einlagerung und Entnahme des Stückgutes mehr oder weniger stark automatisiert sind. Allen Kommissionier-Techniken ist gemeinsam, möglichst viel Ware auf geringstem Raum raschestem Zugriff verfügbar zu halten. Besonders hohe Anforderungen werden an die Bereithaltung und Kommissionierung von Stückgut dann gestellt, wenn die Zahl der zu kommissionierenden Sorten sehr groß ist, z.B. mehrere zehntausend beträgt, und die Nachfrage nach den einzelnen Sorten sehr unterschiedlich ist. Dies ist z.B. beim Pharma-, Kosmetik- und Chemikalien-Großhandel der Fall. Dort gibt es einige tausend Produkte, die ständig in großer Stückzahl abgerufen werden, einige zehntausend Produkte, die deutlich weniger oft und in geringerer Stückzahl abgerufen werden und schließlich nochmals einige zehntausend Produkte, die nur selten und in nur geringer Stückzahl benötigt werden. Für die Bereithaltung und Kommissionierung dieser verschiedenen Produktgruppen werden daher entsprechend angepaßte Kommissionier-Automaten benötigt.

Ein Vorrichtungstyp, der ziemlich universell einsetzbar ist, insbesondere für die beiden erstgenannten Produktgruppen, ist in der deutschen Offenlegungsschrift 32 13 119 beschrieben. Für die Bereithaltung und Kommissionierung von Produkten der oben bezeichneten dritten Gruppe, also Produkten, die selten und nur in geringer Stückzahl benötigt werden, ist die bekannte Vorrichtung jedoch zu aufwendig.

Der Erfindung liegt daher die Aufgabe zugrunde, ein Verfahren und eine Vorrichtung zum Kommissionieren von Stückgutsorten bereitzustellen, das bzw. die es ermöglicht, eine große Zahl von kleinformatigen Stückgutsorten auf engstem Raum einem raschen manuellen Zugriff verfügbar zu halten und außer der manuellen Entnahme alle anderen Kommissioniervorgänge zu automatisieren.

Gelöst wird diese Aufgabe mit Hilfe eines Verfahrens der eingangs geschilderten Art, das dadurch gekennzeichnet ist,
daß man den Kommissionierauftrag in einen Rechner gibt,
mit Hilfe des Rechners am Paternosterregal das jeweilige Fach und die zu entnehmende Stückzahl tragsatz- und auftragsbezogen anzeigt,
die angezeigten Stückgüter entnimmt, in auftragsbezogene Sammelbehälter überführt und jede Entnahme dem Rechner bestätigt,
den Inhalt eines jeden Sammelbehälters nach vollständiger Erledigung eines Auftrags automatisch in einen Transportbehälter überführt, der mit Hilfe von rechnergesteuerten Transportmitteln auftragsbezogen vom Rechner bereitgestellt wird,
den Transportbehälter mit dem vollständigen Auftragsinhalt automatisch zur Ausgabestelle befördert und
alle Paternosterbewegungen rechnergesteuert optimiert.

Vorteilhaft wird die Zuordnung von Sammelbehälter zu Auftrag automatisch angezeigt, so daß die am Paternosterregal arbeitende Person sich ganz auf die Entnahme konzentrieren kann. Ihr wird am Paternoster die genaue Position des Faches angezeigt, aus dem die Artikel entnommen werden sollen. Unmittelbar neben der Positionsangabe wird die zu entnehmende Stückzahl angezeigt. Der Rechner steuert den Tragsatz, der das angezeigte Fach enthält, auf dem kürzesten Weg in Entnahmeposition. Gleichzeitig wird an einem Arbeitstisch, der unmittelbar an die Vorderfront des Regales angrenzt und in dessen Arbeitsfläche eine größere Zahl von schalenartigen Sammelbehältern eingelassen ist, optisch angezeigt, welcher Sammelbehälter für die Bearbeitung des Auftrages verwendet werden soll. Die ausführende Person entnimmt dem angezeigten Fach die angezeigte Zahl von zum Beispiel Medikamentenschachteln, legt diese in den am Tisch angezeigten Sammelbehälter und bestätigt dies dem Rechner durch Tastendruck.
Vorteilhaft wird dabei die Leuchtanzeige gleichzeitig auch als Bestätigungstaste verwendet, so daß auch hiermit Fehlbedienungen vorgebeugt wird. Die Anzeige am Paternoster erlischt, sobald dem Rechner die angezeigte Stückzahl als entnommen bestätigt worden ist.

Es können mehrere Aufträge parallel bearbeitet werden. Wird ein Artikel für mehrere Kippschalen benötigt, so leuchtet zuerst die Anzeige der einen Kippschale und nach Bestätigung der eingelegten Artikel leuchtet die Anzeige der nächsten Kippschale, gleichzeitig ändert sich auch am Regal die Anzeige der Fachposition und Stückzahl.

Wenn alle zu einem Auftrag gehörenden Artikel in den zugehörigen Sammelbehälter eingelegt und dort bestätigt worden sind, wird ein auftragsbezogener Strichcode-markierter Kommissionierbehälter vom Rechner automatisch mit Hilfe von Fördermitteln heran- und unter den in der Tischplatte angeordneten Sammelbehältern hindurchtransportiert. Dabei wird der Inhalt des Sammelbehälters im richtigen Augenblick durch Kippen bzw. Drehen des Sammelbehälters in den zugehörigen Kommissionierbehälter überführt.

Dieser Kommissionierbehälter wird anschließend automatisch entweder direkt zur Auslieferungsstelle oder zur Vervollständigung des Kommissionierauftrages zu einem oder mehreren weiteren Regalen transportiert.

Die erfindungsgemäße Vorrichtung zur Durchführung des geschilderten und beanspruchten Verfahrens ist in den Patentansprüchen 4 bis 7 angegeben. Für die Zwecke der Erfindung kann man ein übliches Paternosterregal verwenden, das an der Frontseite über der Arbeitsöffnung mit einer Anzeigeeinheit versehen wird. Diese Anzeigeeinheit besteht aus Anzeigemitteln, vorzugsweise zweigeteilten Leuchtanzeigen, welche die Fachposition in der Tiefe des Regals und die aus diesem Fach zu entnehmende Stückzahl anzeigen. Die Fachposition an der Frontseite wird durch die Anzeigemittel selbst angezeigt, denn über jedem Frontseitenfach sind die besagten Anzeigemittel angebracht. Unter einem Tragsatz versteht man denjenigen Satz von Behältern bzw. Fächern, der in einer Ebene, wie auf einem Regalbrett, angeordnet und von der Arbeitsöffnung her zugänglich ist. Parallel zur Frontseite ist ein solcher Tragsatz in Fächer- bzw. Behälter gegliedert. Senkrecht zur Frontseite erstrecken sich in die Tiefe, fluchtend mit dem Frontseitenfach, weitere Fächer bzw. Behälter, in welchen die zu kommissionierenden Artikel-Sorten bereitgehalten werden. In jedem Fach ist eine bestimmte Sorte untergebracht. Auf diese Weise kann eine sehr große Zahl von Sorten bereitgehalten werden.

Unmittelbar vor der Arbeitsöffnung befindet sich ein Arbeitstisch, der sich über die gesamte Breite des Regals erstreckt und in dessen Tischfläche eine Vielzahl von schalenartigen Behältern eingebaut ist. Die Behälter sind nach oben, also zur Tischfläche hin, offen. Sie sind so gelagert, daß sie durch eine Dreh- bzw. Kippbewegung ihren Inhalt in Richtung unter die Tischfläche abgeben können. Dieses Drehen bzw. Kippen erfolgt automatisch mit Hilfe eines vom Rechner gesteuerten Elektromotors. Vorteilhaft können die Kippschalen einseitig direkt auf den Getriebestummel eines Schneckengetriebe-Gleichstrommotors montiert sein. Die Kippschalen werden in dem Moment nach unten entleert, in dem ein größerer, Strichcodemarkierter Kommissionierbehälter auf einem Förderband unter der Kippschale vorbeifährt, ohne anzuhalten.

Wie die vorstehenden Ausführungen zeigen, wird erfindungsgemäß ein Teil eines ansonsten vollautomatischen, rechnergesteuerten zweistufigen Kommissionierverfahrens manuel erledigt. Es handelt sich dabei um denjenigen Teil, der unter den gegebenen Umständen manuell wesentlich kostengünstiger durchgeführt werden kann als bei Vollautomatisierung. Auf diese Weise wird die große Zahl von an sich bekannten Entnahme- bzw. Auswerfervorrichtungen eingespart, die in bekannten Kommissionier-Verfahren benötigt wird. Die erfindungsgemäße Kombination von Paternosterregal, Kommissioniertisch mit automatisch kippbaren Sammelbehältern und automatischer Fach- und Stückzahlanzeige eröffnet die Möglichkeit, eine sehr große Zahl von Artikelsorten, die einzeln nicht allzuoft benötigt werden, sehr kostengünstig, sicher und unter Verwertung menschlicher Arbeitskraft zu kommissionieren.

Anhand der nachfolgenden Figuren wird eine beispielhafte Ausführungsform näher beschrieben.

Figur 1     zeigt eine Gesamtansicht einer erfindungsgemäßen Vorrichtung,

Figur 2     zeigt eine Aufsicht auf den Arbeitstisch und den Regalschrank einer erfindungsgemäßen Vorrichtung,

Figur 3     zeigt eine Frontansicht einer erfindungsgemäßen Vorrichtung.

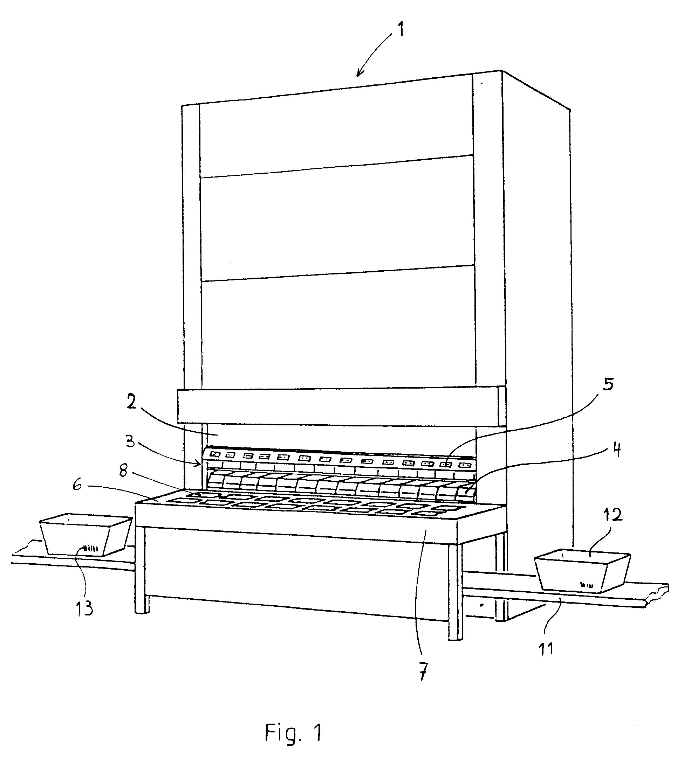

Die in Figur 1 dargestellte erfindungsgemäße Vorrichtung besteht aus einem Paternoster-Regal, das sich in dem mit 1 bezeichneten Schrank befindet. Der Paternoster selbst ist in den Zeichnungen nicht dargestellt. Es handelt sich um ein übliches, motorgetriebenes Paternosterregal, an dessen beiden Stirnseiten jeweils eine an einem Rahmen geführte Tragkette umläuft. Die beiden Ketten verlaufen parallel zueinander. Längs der Ketten sind in Abständen Tragsätze angeordnet, die sich horizontal von einer zur anderen Kette erstrecken und an den Ketten mit Hebelelementen befestigt sind. Eine Verkippung der Tragsätze wird an allen Stellen des Paternosterumlaufs durch an den Tragsätzen befestigte Rollen ausgeschlossen, die in an den Stirnseiten am Rahmen angeordnete Rundum-Führungssysteme eingreifen.

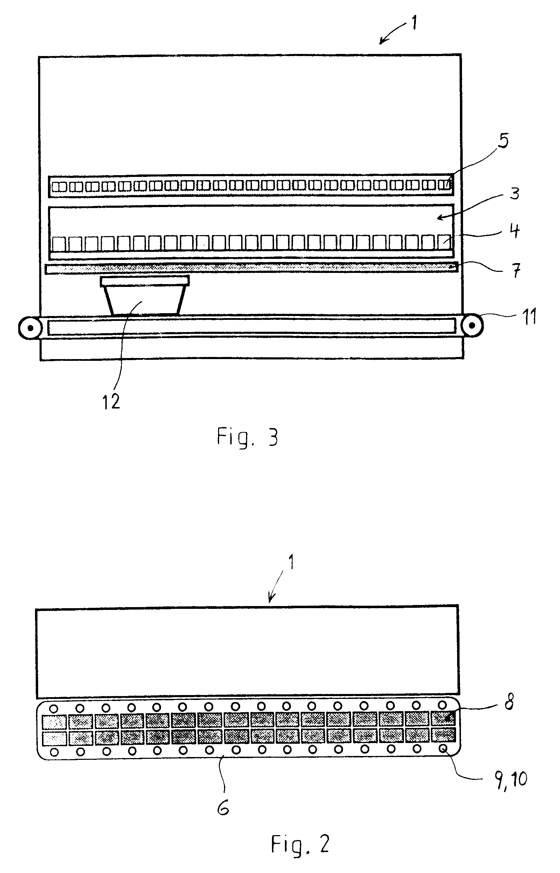

Für die erfindungsgemäßen Zwecke ist das Paternosterregal mit den zweigeteilten Leuchtanzeigen 5, deutlicher zu sehen in Figur 3, unmittelbar oberhalb der Arbeitsöffnung 3 auf der Frontseite 2 ausgestattet. Die Anzeigen 5 befinden sich jeweils in der Mitte über den Fächern 4 der ersten Reihe eines Tragsatzes. Der ganze Tragsatz ist in den Zeichnungen nicht dargestellt. Hinter der ersten Reihe der in den Figuren 1 und 3 dargestellten Fächer 4 sind in Tiefenrichtung des Regals, fluchtend mit den Fächern der ersten Reihe, weitere Fächer angeordnet. Ihre Position und die Zahl der zu entnehmenden Artikel wird in den Anzeigen 5 angezeigt. Vor der Arbeitsöffnung 3 des Regals steht ein Tisch 7, in dessen Arbeitsfläche 6 eine größere Zahl von schalenartigen Behältern 8 eingelassen ist. Jedem Behälter 8 ist ein nicht gezeigter fernbetätigbarer Elektromotor zugeordnet, mit dessen Hilfe der Behälter 8 nach unten in Richtung auf den Kommissionierbehälter 12 gekippt werden kann. Wie in Figur 2 gezeigt, ist jedem Behälter 8 des Arbeitstisches eine Anzeige und ein Schalter zugeordnet. In der Darstellung der Figur 2 sind Anzeige und Schalter in einer Vorrichtung vereinigt. Es kann sich z.B. um eine Leuchttaste handeln. Die Anzeige 9 teilt der Bedienungsperson mit, in welchen Behälter 8 die zu einem bestimmten

Auftrag gehörenden Artikel gelegt werden sollen, deren Zahl und Fundstelle von der Anzeige 5 am Regal angezeigt wird. Die Bedienungsperson bestätigt durch Drücken der Taste 10 die Entnahme und das Einlegen der Artikel. Wenn der Auftrag erledigt ist, wird der Inhalt des Behälters 8 durch eine Dreh- bzw. Kippbewegung des Behälters 8 in einen vorbeifahrenden Kommissionierbehälter 12 überführt. Die Kommissionierbehälter 12 sind mit einem Strichcode 13 versehen. Sie werden durch einen nicht gezeigten Strichcodeleser vor dem Tisch 7 kontrolliert. Die Kommissionierbehälter 12 werden bei der dargestellten Ausführungsform mit Hilfe eines Förderbandes 11 befördert.

Die Steuerung der Vorrichtung erfolgt durch ein nicht gezeigtes Rechnersystem. Das Rechnersystem umfaßt einen Personal Computer, der als Leitrechner dient, und für jedes Paternoster-Regal jeweils einen lokalen Steuerrechner. Diese Rechner sind durch ein lokales Netzwerk miteinander verbunden. Der Leitrechner ist außerdem mit dem Strichcodeleser und gegebenenfalls mit einem Host-Rechner verbunden. Der lokale Steuerrechner ist mit den Anzeigen 5, dem Antrieb des Paternoster-Regals, den Elektromotoren für die Behälter 8, den Anzeigen 9 und den Tasten 10 verbunden.

Kommissionieraufträge werden entweder direkt in den Leitrechner eingegeben oder vom Host-Computer zu ihm übertragen, und in einer auf dem Leitrechner residenten Datenbasis gespeichert. Ebenso wird die Information in einer auf dem Leitrechner residenten Datenbasis gespeichert, die den Zusammenhang zwischen einzelnen Artikeln und deren Lagerpositionen im Paternoster-Regal und die Zuordnung von Kommissionieraufträgen zu Behältern 8 betrifft. Um Entnahmevorgänge zu initiieren, sendet der Leitrechner Entnahmebefehlssätze an den lokalen Steuerrechner. Die Reihenfolge dieser Entnahmebefehlssätze wird durch ein auf dem Leitrechner laufendes Programm so optimiert, daß die Anzahl der benötigten Paternoster-Bewegungen minimal wird. Dadurch werden im allgemeinen verschiedene Kommissionieraufträge parallel bearbeitet.

Ein Entnahmebefehlssatz besteht im wesentlichen aus einer Auftrags-Kennnummer, einer Tragsatz-Kennnummer, einer Fach-Kennnummer (sie identifiziert die Position und die Tiefe eines Faches) und die Anzahl der zu entnehmenden Artikel. Bis zu 36 Entnahmebefehlssätze können in dem lokalen Steuerrechner gespeichert werden.

Der lokale Steuerrechner arbeitet die Entnahmebefehlssätze sequentiell ab, indem er den gewünschten Tragsatz in die Entnahmeposition bringt (falls er nicht bereits in dieser Position ist), und dabei automatisch die optimale Paternoster-Drehrichtung wählt, d.h. diejenige Drehrichtung, die die kürzere Paternoster-Bewegung zur Erreichung der Entnahmeposition erfordert. Dann wird das Fach, aus dem der gewünschte Artikel zu entnehmen ist, angezeigt, indem auf der über der Fachposition befindlichen Anzeige 5 die Fachtiefe angezeigt wird. Außerdem zeigt die Anzeige 5 die Anzahl der aus dem Fach zu entnehmenden Artikel an. Gleichzeitig wird der dem Auftrag, zu dem der zu entnehmende Artikel gehört, zugeordnete Behälter 8 durch Aufleuchten der entsprechenden Anzeige 9 gekennzeichnet. Der lokale Steurrechner wartet in diesem Zustand auf ein Signal von der entsprechenden Betätigungstaste 10. Nach Empfang dieses Signals sendet er seinerseits ein Bestätigungssignal an den Leitrechner und beginnt mit der Abarbeitung des nächsten gespeicherten Entnahme-Befehlssatzes.

Ein auf dem Leitrechner laufendes Programm stellt fest, wann ein Kommissionierauftrag vollständig abgearbeitet ist. Es veranlaßt dann die Herbeiführung eines diesem abgearbeiteten Auftrag zugeordneten Kommissionierbehälters. Bei der Ankunft des Kommissionierbehälters am Paternoster-Regal liest der Strichcode-Leser den auf dem Kommissionierbehälter befindlichen Strichcode und sendet die gelesene Information an den Leitrechner. Der Leitrechner überprüft diese Funktion. Falls der Kommissionierbehälter als der dem abgearbeiteten Auftrag zugehörige identifiziert wird, veranlaßt der Leitrechner ein Kippen des dem Auftrag zugeordneten Behälters 8, indem er einen entsprechenden Befehl an den lokalen Steuerrechner sendet. Dadurch werden die Artikel des abgearbeiteten Auftrags in den Kommissionierbehälter überführt. Der weitere Weg des gefüllten Kommissionierbehälters kann durch den Leitrechner, den Host-Rechner oder einen anderen spezialisierten Rechner gesteuert werden.

Alle Funktionen der Vorrichtung werden durch das Rechnersystem gesteuert. Lediglich die Entnahme aus dem Regal 1 und das Einlegen in die Behälter 8 erfolgt manuell.

**Patentansprüche**

1. Verfahren zum Kommissionieren von Stückgutsorten, die in einem rechnergesteuerten Paternosterregal in Fächern bereitgehalten werden, die zu Tragsätzen zusammengefaßt sind, bei dem man jeweils einen bestimmten Tragsatz in Entnahmeposition bringt und das gewünschte Stückgut einem bestimmten Fach des Tragsatzes entnimmt,

**dadurch gekennzeichnet,**

daß man jeden Kommissionierauftrag in den Rechner eingibt;

mit Hilfe des Rechners am Paternosterregal das jeweilige Fach und die zu entnehmende Stückzahl tragsatz- und auftragsbezogen anzeigt;

die angezeigten Stückgüter entnimmt, in auftragsbezogene Sammelbehälter überführt und jede Entnahme dem Rechner bestätigt;

den Inhalt eines jeden Sammelbehälters nach vollständiger Erledigung eines Auftrages automatisch in einen Transportbehälter überführt, der mit Hilfe von rechnergesteuerten Transportmitteln auftragsbezogen vom Rechner bereitgestellt wird;

den Transportbehälter mit dem vollständigen Auftragsinhalt automatisch zur Ausgabestelle befördert und die Paternosterbewegungen rechnergesteuert optimiert.

2.  Verfahren nach Anspruch 1, dadurch gekennzeichnet, daß die Zuordnung von Sammelbehälter zu Auftrag automatisch angezeigt wird.

3.  Verfahren nach einem der Ansprüche 1 oder 2, dadurch gekennzeichnet, daß der Transportbehälter zur Vervollständigung eines Kommissionierauftrages ggf. mehreren Paternosterregalen rechnergesteuert zugeführt wird.

4.  Vorrichtung zum Kommissionieren von Stückgutsorten zur Durchführung des Verfahrens nach einem der Ansprüche 1 - 3,

mit mindestens einem Paternoster-Regal, dessen Tragsätze in der Breite und Tiefe in Fächer unterteilt sind, in in denen Stückgutsorten bereitgehalten werden,

mit Anzeigemitteln am Regal und

mit einem Tisch an der Frontseite des Regals, der sich über dessen ganze Breite erstreckt,

dadurch gekennzeichnet,

daß an der Frontseite (2) oberhalb der Arbeitsöffnung (3) des Regals (1) über jedem Frontseitenfach (4) eines Tragsatzes Anzeigemittel (5) angeordnet sind, welche die Tiefe und Zahl einer zu entnehmenden Stückgutsorte optisch anzeigen;

daß in der Arbeitsfläche (6) des Tisches (7) schalenartige Behälter (8) schwenkbar angeordnet sind, die zur Arbeitsfläche (6) hin offen sind und in Richtung unter die Arbeitsfläche (6) gekippt werden können;

daß neben jedem schalenartigen Behälter (8) eine optische Anzeige (9) und ein elektrischer Schalter (10), mit dem jedes dem Regal entnommene und in den schalenartigen Behälter (8) gelegte Stückgut einem zentralen Rechner bestätigt werden kann, vorgesehen sind;

daß unter den schalenartigen Behältern (8) Fördermittel (11) mit Kommissionierbehältern (12) angeordnet sind und

daß ein Rechner zur Steuerung und Optimierung aller automatischen Funktionen der Vorrichtung vorgesehen ist.

5.  Vorrichtung nach Anspruch 4, dadurch gekennzeichnet, daß die schalenartigen Behälter (8) zwecks Fernbetätigung mit einem Elektromotor verbunden sind.

6.  Vorrichtung nach Anspruch 4, dadurch gekennzeichnet, daß die optische Anzeige (9) und der elektrische Schalter (10) in einer Leuchttaste vereinigt sind.

7.  Vorrichtung nach Anspruch 4, dadurch gekennzeichnet, daß jeder Kommissionierbehälter (12) mit einem Strichcode (13) versehen ist und daß eingangsseitig vor dem Tisch (7) oder am Anfang des Tisches (7) in der Nähe des Förderbandes (11) ein Strichcodeleser für die auf den Transportbehältern (12) aufgebrachten Strichcodes (13) angeordnet ist.

Fig. 1

Fig. 3

Fig. 2

| | **EINSCHLÄGIGE DOKUMENTE** | | | EP 92102518.5 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int Cl⁵) |
| A | DE - C - 3 809 520 (Dr.-ING. SEUFERT GMBH) * Gesamt * -- | | 1,4 | B 65 G 1/137 |
| A | DE - A - 3 048 394 (KARL MENGELE & SÖHNE MASCHINENFABRIK UND EISEN- GIESSEREI GMBH & CO) * Fig. 1-4 * -- | | 1,4 | |
| A | US - A - 4 588 349 (REUTER) * Fig. 1 * ---- | | 1,4 | |

**RECHERCHIERTE SACHGEBIETE (Int Cl⁵)**

B 65 G

Der vorliegende Recherchenbericht wurde für alle Patentansprüche erstellt.

| Recherchenort | Abschlußdatum der Recherche | Prüfer |
|---|---|---|
| WIEN | 22-04-1992 | PISSENBERGER |